(19) **Europäisches Patentamt / European Patent Office / Office européen des brevets**

(11) **EP 4 534 492 A1**

(12) **EUROPEAN PATENT APPLICATION**
published in accordance with Art. 153(4) EPC

(43) Date of publication:
**09.04.2025   Bulletin 2025/15**

(21) Application number: **23842102.8**

(22) Date of filing: **30.06.2023**

(51) International Patent Classification (IPC):
**C03C 10/12** (2006.01)          **C03C 21/00** (2006.01)
**C03C 10/04** (2006.01)

(86) International application number:
**PCT/CN2023/105260**

(87) International publication number:
**WO 2024/017037 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **22.07.2022   CN 202210869330**

(71) Applicants:
• **Chongqing Aureavia Hi-Tech Glass Co., Ltd.**
  **Chongqing 400714 (CN)**
• **Huawei Technologies Co., Ltd.**
  **Shenzhen, Guangdong 518129 (CN)**

(72) Inventors:
• **HUANG, Hao**
  **Chongqing 400714 (CN)**
• **ZHOU, Jingpeng**
  **Chongqing 400714 (CN)**
• **TIAN, Qian**
  **Chongqing 400714 (CN)**
• **LU, Guangyu**
  **Chongqing 400714 (CN)**
• **CHEN, Jiejie**
  **Shenzhen, Guangdong 518129 (CN)**
• **ZHU, Guangxiang**
  **Shenzhen, Guangdong 518129 (CN)**

(74) Representative: **Locas, Davide et al**
  **Cantaluppi & Partners S.r.l.**
  **Piazzetta Cappellato Pedrocchi, 18**
  **35122 Padova (IT)**

(54) **REINFORCED MICROCRYSTALLINE GLASS, GLASS DEVICE AND ELECTRONIC APPARATUS**

(57)    The present invention belongs to the technical field of lithium-aluminum-silicon microcrystalline glass, and specifically relates to reinforced microcrystalline glass with good monomer strength and a good drop resistance performance, a glass device and an electronic apparatus. The reinforced microcrystalline glass comprises a compressive stress layer and a tensile stress layer, main crystalline phases of the reinforced microcrystalline glass comprise a petalite crystalline phase and a lithium disilicate crystalline phase; and the reinforced microcrystalline glass satisfies: surface CS $\geq$ 400 MPa; surface CS/ |CTAV| $\geq$ 17.00, where |CT_AV| is the absolute value of the average tensile stress in the tensile stress layer, and the unit is MPa; and DOL_0 $\geq$ 0.15 t, where DOL_0 refers to the depth of the compressive stress layer, and t refers to the thickness of the reinforced microcrystalline glass. The reinforced microcrystalline glass of the present invention has good non-contact surface cracking resistance, and also has good contact surface cracking resistance and weather resistance.

FIG. 5

EP 4 534 492 A1

**Description**

**CROSS-REFERENCE TO RELATED APPLICATION**

The present invention claims the priority to the Chinese patent application with the filling No. CN202210869330.9 filed with the Chinese Patent Office on July 22, 2022, and entitled "REINFORCED MICROCRYSTALLINE GLASS, GLASS DEVICE AND ELECTRONIC APPARATUS", the contents of which are incorporated herein by reference in entirety.

**TECHNICAL FIELD**

The present invention belongs to the technical field of lithium aluminum silicate microcrystalline glass, and specifically relates to a reinforced microcrystalline glass with good monomer strength and good drop resistance performance, a glass device, and an electronic apparatus.

**BACKGROUND ART**

With the advent of the intelligent era, electronic apparatus such as mobile phones, tablets, and watches have become indispensable portions of daily life, with most damage occurring due to screen breakage. Therefore, there is an urgent need to improve the strength of the cover glass. Damage to cover glass mostly results from that smartphone drops or impacts with other objects. In general, there are two main types of damage: contact surface cracking and non-contact surface cracking.

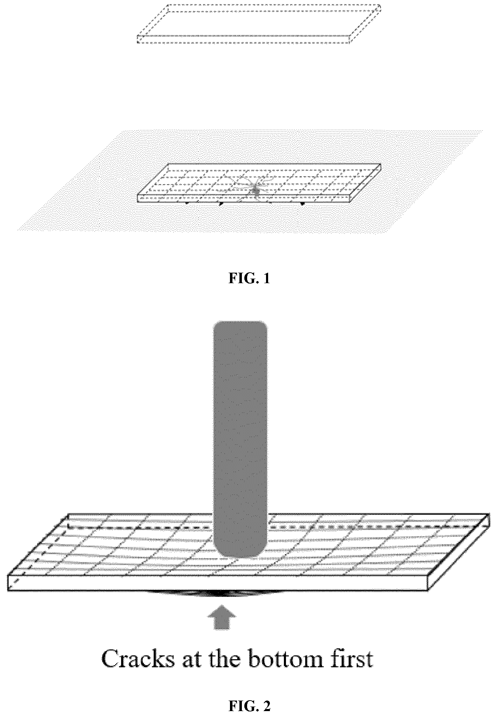

Contact surface cracking refers to the localized damage to the glass surface when the glass surface collides with a harder and sharper object (such as fine sand, cement, or small stones), which forms a hemispherical crack propagation source at the damage point, a part of the collision energy attenuates, and the remaining energy continues to propagate. When the compressive stress level on the glass surface is insufficient to counteract the remaining energy, the crack will propagate through the glass surface region. When the longitudinal crack passes through the compressive stress layer and reaches the tensile stress layer region, the crack will rapidly propagate in the tensile stress region, causing the crack to pass through the entire glass. Thus, it leads to breakage of the glass, and the glass breaks into various small fragments, as shown in FIG. 1.

Non-contact surface cracking refers to that when an object with a blunt protrusion or an object with hardness less than the glass collides with the glass surface, the contact surface will be compressed, the corresponding rear side of the contact point will be stretched because of the deformation of the glass, and the glass will be broken when the force of the collision is greater than the maximum compressive stress on its surface, as shown in FIG. 2.

Microcrystalline glasses with petalite and lithium disilicate as the main crystalline phases have gained widespread attention in the cover plate industry because their crystallinity can reach more than 70 wt%, their transmittance is close to commonly used lithium aluminum silicate glass, and they can be chemically strengthened in salt baths/molten salts, which further enhances compression resistance, impact resistance, and drop resistance and other performances.

At present, research on the damage resistance of microcrystalline glass/microcrystalline cover glass with petalite and lithium disilicate as the main crystalline phases primarily focuses on increasing CT and DOL_0 to improve the damage resistance of the glass by inhibiting contact surface cracking. However, research on improving the damage resistance of the glass by inhibiting non-contact surface cracking is limited, and the non-contact surface cracking resistance provided by the existing microcrystalline glasses in this type needs to be further improved.

In addition, most current research is focused on enhancing/optimizing the mechanical performance of the microcrystalline glass in this type, which often overlooks other performance aspects, such as weather resistance. The application CN111867993A mentions that after the microcrystalline glass in this type undergoes ion-exchange chemical reinforcement, the obtained strengthened glass product tends to exhibit low chemical durability, which will obviously impact the use of glass products in specific environments. According to the disclosure of that patent application, the solution to improve chemical durability includes controlling the absolute value of the maximum surface compressive stress to be 1.8-2.2 times the absolute value of the maximum central tensile stress through a specific reinforcement method, and controlling the surface CS not to exceed 350 MPa.

**SUMMARY**

The present invention provides a reinforced microcrystalline glass, wherein the reinforced microcrystalline glass includes a compressive stress layer and a tensile stress layer. The main crystalline phases of the reinforced microcrystalline glass include a petalite crystalline phase and a lithium disilicate crystalline phase. The reinforced microcrystalline glass satisfies conditions:

$$\text{surface } CS \geq 400 \text{ MPa;}$$

surface CS/ICT _AV| $\geq$ 17.00, where |CT_AV| is an absolute value of an average tensile stress in the tensile stress layer, with a unit of MPa; and
DOL_0 $\geq$ 0.15t, where DOL_0 is a depth of the compressive stress layer, and t is a thickness of the reinforced microcrystalline glass.

Optionally, the surface CS of the reinforced microcrystalline glass is $\geq$ 500 MPa. Optionally, the surface CS is 550-1000 MPa.

Optionally, |CT_AV| of the reinforced microcrystalline glass is $\geq$ 30 MPa. Optionally, |CT_AV| is 35-60 MPa.

Optionally, in the reinforced microcrystalline glass, 50.00 $\geq$ surface CS/ICT _AV| $\geq$ 17.00.

Optionally, in the reinforced microcrystalline glass, 0.25t $\geq$ DOL_0 $\geq$ 0.15t.

Optionally, the reinforced microcrystalline glass further satisfies a condition: |CT_CV| $\geq$ 50 MPa, where |CT_CV| is an absolute value of a maximum tensile stress in the tensile stress layer.

Optionally, |CT_CV| is 55-80 MPa.

Optionally, a surface $K_2O$ concentration of the reinforced microcrystalline glass is $\geq$ 7.00 wt%.

Optionally, a surface $K_2O$ concentration of the reinforced microcrystalline glass is 7.00-15.00 wt%.

In some optional embodiments of the present invention, a total weight percentage of the petalite crystalline phase and lithium disilicate crystalline phase in the reinforced microcrystalline glass is not less than 71.00 wt%.

Optionally, the total weight percentage of the petalite crystalline phase and lithium disilicate crystalline phase in the reinforced microcrystalline glass is 71.00-90.00 wt%.

Optionally, a ratio of the petalite crystalline phase to the lithium disilicate crystalline phase in the reinforced microcrystalline glass is (0.9-1.1):1.

Optionally, an average grain size in the reinforced microcrystalline glass is $\leq$ 100 nm. Optionally, the average grain size is 10-50 nm. Optionally, the average grain size is 15-25 nm.

Optionally, in mass percent, a composition of the tensile stress layer in the reinforced microcrystalline glass includes: $SiO_2$ of 58.00-76.00%; $Al_2O_3$ of 6.00-8.00%; $P_2O_5$ of 2.00-3.00%; $ZrO_2$ of 4.00-6.00%; $Na_2O$ of 3.00-10.00%; $Li_2O$ of 9.00-12.00%; and $B_2O_3$ of 0-3.00%.

Optionally, at a thickness of 0.7 mm, an average single-rod static pressure strength of the reinforced microcrystalline glass is $\geq$ 400 N. Optionally, at a thickness of 0.7 mm, an average single-rod static pressure strength of the reinforced microcrystalline glass is 401-500N.

Optionally, under conditions of 85°C and 85% relative humidity, a high-temperature and high-humidity failure test is performed on the reinforced microcrystalline glass, where a high-temperature and high-humidity failure time is $\geq$ 204 h, and the high-temperature and high-humidity failure time is a time at which the reinforced microcrystalline glass develops non-removable spots or fogging points under corresponding high-temperature and high-humidity conditions.

Optionally, at a thickness of 0.7 mm, an anti-sandpaper drop test is performed on the reinforced microcrystalline glass using 120-mesh sandpaper, where an average anti-sandpaper drop height is 1.10-1.50 m.

Optionally, at a thickness of 0.7 mm, for light with a wavelength of 550 nm, a transmittance of the reinforced microcrystalline glass is not less than 89.00%.

The present invention further provides another reinforced microcrystalline glass, wherein the reinforced microcrystalline glass includes a compressive stress layer and a tensile stress layer, and the reinforced microcrystalline glass includes a petalite crystalline phase and a lithium disilicate crystalline phase, with a total weight percentage not less than 71.00 wt%.

The reinforced microcrystalline glass satisfies conditions:

$$\text{surface } CS \geq 400 \text{ MPa;}$$

surface CS/ICT _AV| $\geq$ 17.00, where |CT_AV| is an absolute value of an average tensile stress in the tensile stress layer, with a unit of MPa;
DOL_0 $\geq$ 0.15t, where DOL_0 is a depth of the compressive stress layer, and t is a thickness of the reinforced microcrystalline glass; and
surface $K_2O$ concentration of the reinforced microcrystalline glass $\geq$ 7.50 wt%.

Optionally, the surface CS of the reinforced microcrystalline glass is $\geq$ 500 MPa. Optionally, the surface CS is 550-1000 MPa.

Optionally, |CT_AV| of the reinforced microcrystalline glass is $\geq$ 30 MPa. Optionally, |CT_AV| is 35-60 MPa.

Optionally, in the reinforced microcrystalline glass, 50.00 ≥ surface CS/ICT _AV| ≥ 17.00.

Optionally, in the reinforced microcrystalline glass, 0.25t ≥ DOL_0 ≥ 0.15t.

Optionally, the reinforced microcrystalline glass further satisfies a condition: |CT_CV| ≥ 50 MPa, where |CT_CV| is an absolute value of a maximum tensile stress in the tensile stress layer. Optionally, |CT_CV| is 55-80 MPa.

Optionally, a surface K2O concentration of the reinforced microcrystalline glass is 7.50-15.00 wt%.

Optionally, the total weight percentage of the petalite crystalline phase and lithium disilicate crystalline phase in the reinforced microcrystalline glass is 71.00-90.00 wt%.

Optionally, a ratio of the petalite crystalline phase to the lithium disilicate crystalline phase in the reinforced microcrystalline glass is (0.9-1.1):1.

Optionally, an average grain size in the reinforced microcrystalline glass is ≤ 100 nm. Optionally, the average grain size in the reinforced microcrystalline glass is 10-50nm. Optionally, the average grain size in the reinforced microcrystalline glass is 15-25nm.

Optionally, in mass percent, a composition of the tensile stress layer in the reinforced microcrystalline glass includes: $SiO_2$ of 58.00-76.00%; $Al_2O_3$ of 6.00-8.00%; $P_2O_5$ of 2.00-3.00%; $ZrO_2$ of 4.00-6.00%; $Na_2O$ of 3.00-10.00%; $Li_2O$ of 9.00-12.00%; and $B_2O_3$ of 0-3.00%.

Optionally, at a thickness of 0.7 mm, an average single-rod static pressure strength of the reinforced microcrystalline glass is ≥ 400 N. Optionally, at a thickness of 0.7 mm, an average single-rod static pressure strength of the reinforced microcrystalline glass is 401-500N.

Optionally, under conditions of 85°C and 85% relative humidity, a high-temperature and high-humidity failure test is performed on the reinforced microcrystalline glass, where a high-temperature and high-humidity failure time is ≥ 204 h, and the high-temperature and high-humidity failure time is a time at which the reinforced microcrystalline glass develops non-removable spots or fogging points under corresponding high-temperature and high-humidity conditions.

Optionally, at a thickness of 0.7 mm, an anti-sandpaper drop test is performed on the reinforced microcrystalline glass using 120-mesh sandpaper, where an average anti-sandpaper drop height is 1.10-1.50 m.

Optionally, at a thickness of 0.7 mm, for light with a wavelength of 550 nm, a transmittance of the reinforced microcrystalline glass is not less than 89.00%.

The present invention also provides a glass device, wherein the glass device is made from the reinforced microcrystalline glass as described in any one of the preceding embodiments.

The present invention further provides an electronic apparatus, which includes a cover, wherein the cover includes the reinforced microcrystalline glass as described in any one of the preceding embodiments.

Optionally, the electronic apparatus includes, but is not limited to, at least one of the following: a mobile phone, a display, a tablet, a smart watch, a smart wearable device, or a television.

## BRIEF DESCRIPTION OF DRAWINGS

In order to more clearly illustrate the technical solutions of the embodiments of the present invention, a brief introduction to the drawings required in the embodiments will be provided below. It should be understood that the following drawings only show some embodiments of the present invention and should not be considered as limiting the scope. For those skilled in the art, other related drawings can be derived from these drawings without the need for inventive labor.

FIG. 1 is a schematic diagram of a contact surface fracture of a reinforced microcrystalline glass;

FIG. 2 is a schematic diagram of a non-contact surface fracture of a reinforced microcrystalline glass;

FIG. 3 is an FSM-6000 test chart of Example 1 of the present invention;

FIG. 4 is a DSC test curve of Example 1 of the present invention;

FIG. 5 is an XRD result chart of Example 1 of the present invention;

FIG. 6 is a transmittance test result chart of Example 1 of the present invention;

FIG. 7 is an image of a 24-h sample in a high-temperature and high-humidity environment of Comparative Example 4;

FIG. 8 is an image of a 240-h sample in a high-temperature and high-humidity environment of Example 1 of the present invention; and

FIG. 9 is an image of a 240-h sample in a high-temperature and high-humidity environment of Comparative Example 3.

## DETAILED DESCRIPTION OF EMBODIMENTS

The endpoints of the range disclosed in the present invention and any values are not limited to the precise range or value; these ranges or values should be understood to include values close to these ranges or values. For numerical ranges, the values between the endpoints of different ranges, between the endpoints of different ranges and individual points, and between individual points themselves can be combined to form one or more new numerical ranges, where the numerical ranges should be considered as specifically disclosed herein.

The following are the definitions of terms and the testing methods.

As used herein, the term "microcrystalline glass", also known as glass-ceramic, is a solid composite material that comprises both a glass phase and a crystalline phase (also known as a microcrystalline phase), which is prepared by the targeted controlled crystallization of substrate glass.

As used herein, the term "reinforced microcrystalline glass" is a solid composite material obtained after the chemical reinforcement treatment of microcrystalline glass. During high-temperature chemical reinforcement treatment, alkali metal ions with larger ionic radii (such as potassium ions, sodium ions) in the salt bath/molten salt will replace alkali metal ions with smaller ionic radii (such as sodium ions, lithium ions) in the microcrystalline glass, thereby generating an ion exchange volume difference and generating compressive stress on the surface of the microcrystalline glass.

As used herein, the term "surface CS" is surface compressive stress/surface compression stress, where after chemical reinforcement of the microcrystalline glass/glass-ceramic, alkali metal ions with smaller radii on the surface are replaced by alkali metal ions with larger radii, and due to the packing effect of the alkali metal ions with larger radii, compressive stress is generated on the surface of the microcrystalline glass, referred to as surface compressive stress.

As used herein, the term "DOL_0" is the depth of the compressive stress layer, also called the compressive stress layer depth, which refers to the distance from any surface of the glass to a location close to that surface where the compressive stress is zero.

As used herein, the term "|CT_AV|" is the absolute value of the average tensile stress in the tensile stress layer, specifically referring to the absolute value of the average of all tensile stresses in the tensile stress layer.

As used herein, the term "|CT_CV|" refers to the absolute value of the maximum tensile stress, specifically referring to the absolute value of the maximum of all tensile stresses in the tensile stress layer.

As used herein, the thickness of the glass is determined by micrometer measurement. Before and after chemical reinforcement, the thickness change of the microcrystalline glass is negligible and can be ignored.

As used herein, the surface $K_2O$ concentration is defined in the following manner. The surface $K_2O$ concentration is equal to the $K_2O$ mass divided by the total mass of oxides, where the total mass of oxides includes oxides that can be accurately tested by XRF, such as $SiO_2$, $Al_2O_3$, $P_2O_5$, $ZrO_2$, $Na_2O$, and $K_2O$, and does not include oxides such as $Li_2O$ and $B_2O_3$, which cannot be accurately tested by XRF. XRF testing is performed using uncalibrated testing, and the mass of elements or their oxides with atomic numbers of 6 or below in the glass is not tested. That is, in the present invention, when calculating the $K_2O$ concentration obtained by XRF testing, the total mass of oxides does not include the mass of elements or their oxides in the glass with atomic numbers of 6 or below.

As used herein, the term "refractive index" is the ratio of the speed of light in a vacuum to the speed of light in the medium.

As used herein, the term "SOC" is the photoelastic coefficient. Photoelasticity mainly refers to the phenomenon of birefringence caused by anisotropy in transparent materials after being subjected to stress. Through photoelastic coefficients and birefringence measurements, the residual stress (MPa) inside the material can be obtained.

The method for testing transmittance includes using a visible light spectrophotometer UV2600 (Shimadzu) for transmittance testing. In the examples and comparative examples of the present invention, the transmittance of microcrystalline glass at a wavelength of 550nm is the average transmittance measured at a wavelength of 550nm for multiple glass samples from the same batch. At least 5 samples of microcrystalline glass are taken from each batch for testing.

XRD testing method includes: grounding the microcrystalline glass sheet into fine glass powder by a grinding machine, where a particle size is smaller than $75\mu m$; then, performing a test by using an X-ray diffraction instrument (Shimadzu XRD_6000) under the conditions of a diffraction angle range of $2\theta=10°-50°$, a scanning speed of 6°/min, a working voltage of 40kV, and a working current of 30mA; obtaining the XRD diffraction peak curve; and analyzing the XRD diffraction data by using specialized software to obtain data such as crystal content/crystalline phase content and average grain size.

The method for obtaining the average grain size (average size of grains) includes using the Scherrer formula $D=K\lambda/(\beta cos\theta)$, where $\lambda$ is the X-ray wavelength, $\beta$ is full width at half maximum of a peak position, and K=0.89, to calculate by the resultant data from the XRD test, and obtaining the average grain size.

The method for obtaining crystal content/crystalline phase content includes: using an X-ray diffraction instrument (Shimadzu XRD-6000) to test the microcrystalline glass sample, then importing the X-ray diffraction test results (RAW format) into X-ray diffraction data Rietveld refinement software (such as Gsas, Fullprof, Maud) for fitting and calculation, to obtain the crystal content/crystalline phase content of the microcrystalline glass sample. The ratio of the fitted crystalline phase peak area to the total fitted peak area is the crystal content.

Differential scanning calorimetry (DSC testing) method includes: sieving through a 200-mesh screen after grinding the sample. The testing conditions are as follows. The samples to be tested are heated from room temperature to 1100°C with a 10°C/min heating rate, and the testing instrument is a Mettler-Toledo TGA/DSC3+ thermogravimetric and synchronous thermal analyzer.

The surface $K_2O$ concentration of the reinforced microcrystalline glass in the present invention is measured by X-ray fluorescence spectrometer (XRF), where the model of the equipment used is Thermo Scientific ARL PERFORM'X, the target material is Rh (rhodium), the tube voltage is 40kW, the current is 60mA, the collimator is 0.15, the selected crystal is LiF200, the selected detector is FPC, the test range is 29mm circle, and the analysis software is UniQuant for uncalibrated analysis. XRF testing is performed using uncalibrated testing, and the mass of elements or their oxides with atomic numbers of 6 or below in the glass is not tested. That is, in the present invention, when calculating the $K_2O$ concentration obtained by XRF testing, the total mass of oxides does not include the mass of elements or their oxides in the glass with atomic numbers of 6 or below.

Surface compressive stress (surface CS) testing conditions include: using the Japanese ORIHARA FSM-6000 for testing, where the light source wavelength is 596nm, SOC=25.5(nm/cm)/MPa, and refractive index=1.54.

Testing conditions for |CT_AV|, DOL_0, |CT_CV| includes the following. The Japanese folding instrument SLP-2000 is used for testing, the light source wavelength is 518nm, SOC=25.5(nm/cm)/MPa, refractive index=1.54, and exposure time is 300usec.

When testing surface CS, |CT_AV|, DOL_0, |CT_CV|, it is necessary to drop the specialized refractive liquid onto the corresponding stress meter, then wipe the reinforced microcrystalline glass product clean, place it on the testing path, and test its values, wherein the refractive index of the refractive liquid used in SLP-2000 is 1.51, and the refractive index of the refractive liquid used in FSM-6000 is 1.72.

Average anti-sandpaper drop height is the sum of the anti-sandpaper drop heights measured for multiple glass samples divided by the number of samples tested, which is used to characterize the performance of the glass in resisting contact surface cracking. At least 10 samples from each batch are taken for testing. The average anti-sandpaper drop

$$\langle h \rangle n = \frac{1}{n} \sum_{i=1}^{n} hi$$

height is calculated as follows, where n is the number of glass samples tested in each batch, and hi is the anti-sandpaper drop height for a single sample tested.

The test method for the anti-sandpaper drop height of the single sample includes the following steps.

Step 1: attaching the to-be-tested glass sample with a length, a width and a thickness of 158.8mm × 72.8mm × 0.7mm to the front of a 200g model machine.

Step 2: placing the model machine on the LVTU LT-SKDL-CD type drop tester, with the glass sample facing the sandpaper; dropping it from a certain height to impact the 120-mesh sandpaper directly below the model machine; and simulating a normal phone drop posture;

increasing the drop height of the model machine according to a certain pattern, if the glass sample does not break, for example, starting with a drop height of 0.4m, a drop impact is performed on the sample, and if the sample does not break, the height is increased by 0.1m each time so as to perform dropping again until the glass sample breaks.

Step 3: recording the previous drop height at which the glass sample broke as the anti-sandpaper drop height, for instance, if the sample breaks at a drop height of 0.5m, the anti-sandpaper drop height of the sample is 0.4m.

The test method for the average single-rod static pressure strength includes: placing the reinforced microcrystalline glass on the bottom ring of a tensile testing machine (LT_850A), starting the testing software, setting the movement speed of the pressing rod to 50mm/min, and clicking to start testing, wherein the software will automatically read the force (N) at which the glass breaks; and testing 10 pieces of glass each time and calculating the average value, which is used to characterize the performance in resisting non-contact surface cracking.

The test method for high-temperature and high-humidity failure time includes: using the QTH_80C full-temperature-and-humidity alternating test chamber for testing, observing and taking out the sample every 12 hours, wiping the glass surface with a dust-free cloth, and observing if any indelible spots or fogging points appear, where the time at which indelible spots or fogging points appear is the high-temperature and high-humidity failure time, which is used to represent weather resistance. During a current observation, if indelible spots or fogging points appear on the sample, and these indelible spots or fogging points did not appear on the sample during the last observation, then, by taking the time at which the glass sample has been currently observed and taken out as a time point, the time at which the glass sample has been in the test chamber is calculated and recorded as the high-temperature and high-humidity failure time for the test sample.

The embodiment of the present invention provides a reinforced microcrystalline glass, a glass device, and an electronic apparatus. The reinforced microcrystalline glass, to a certain extent, overcomes the defects of the prior art, where the non-contact surface cracking resistance of the microcrystalline glass needs to be improved. It possesses good non-contact surface cracking resistance and also possesses good contact surface cracking resistance.

The applicants have found that surface CS is closely related to the non-contact surface cracking resistance of the glass. A reduction in surface CS leads to a decreased non-contact surface cracking resistance of the glass, which makes the glass prone to damage from non-contact surface cracking. In this field, improving the non-contact surface cracking resistance of the microcrystalline glass of this type, and ensuring that other good properties of the microcrystalline glass- such as contact surface cracking resistance (e.g., resistance to sandpaper drop performance) and weather resistance-are maintained, remains a pressing issue. The applicants have further studied and provided the technical solution of the present invention. The embodiment of the present invention provides a reinforced microcrystalline glass with good non-contact surface cracking resistance. The reinforced microcrystalline glass has a chemically strengthened compressive stress layer on its surface and a tensile stress layer within the interior, capable of achieving force balance with the compressive stress layer. In other words, the reinforced microcrystalline glass includes a compressive stress layer and a tensile stress layer. The main crystalline phases of the reinforced microcrystalline glass include a petalite crystalline phase and a lithium disilicate crystalline phase. The reinforced microcrystalline glass satisfies conditions:

$$\text{surface CS} \geq 400 \text{ MPa};$$

surface CS/ICT _AV| $\geq$ 17.00, where |CT_AV| is an absolute value of an average tensile stress in the tensile stress layer, with a unit of MPa;

DOL_0 $\geq$ 0.15t, where DOL_0 is a depth of the compressive stress layer, and t is a thickness of the reinforced microcrystalline glass.

The above technical solution of the present invention provides a reinforced microcrystalline glass with a specific surface CS and a ratio of surface CS to |CT_AV|, and a DOL_0 within the specified range described above. This enables the reinforced microcrystalline glass to have a unique stress structure. The stress structure, when punctured by sharp objects, enables sufficient compressive stress levels to inhibit further crack propagation; and it also enables adequate stress depth to prevent abrupt crack penetration into the tensile stress region that would lead to fracture. Additionally, enough surface CS is provided to prevent rear-side damage from blunt impact, thus ensuring that the reinforced microcrystalline glass meets the requirements for contact surface cracking resistance and simultaneously possesses good non-contact surface cracking resistance.

In some optional embodiments of the present invention, a total weight percentage of the petalite crystalline phase and lithium disilicate crystalline phase in the reinforced microcrystalline glass is not less than 71.00 wt%.

In some optional embodiments of the present invention, a surface $K_2O$ concentration of the reinforced microcrystalline glass is $\geq$ 7.00 wt%. The optional solution also enables the reinforced microcrystalline glass to have good weather resistance at the same time.

The embodiment of the present invention further provides a reinforced microcrystalline glass with good resistance to cracking and weather resistance. The reinforced microcrystalline glass has a chemically strengthened compressive stress layer on its surface and a tensile stress layer within the interior, capable of achieving force balance with the compressive stress layer. The reinforced microcrystalline glass includes a compressive stress layer and a tensile stress layer, and the reinforced microcrystalline glass includes a petalite crystalline phase and a lithium disilicate crystalline phase, with a total weight percentage not less than 71.00 wt%. The reinforced microcrystalline glass satisfies conditions:

$$\text{surface CS} \geq 400 \text{ MPa};$$

surface CS/|CT_AV| $\geq$ 17.00, where |CT_AV| is an absolute value of an average tensile stress in the tensile stress layer, with a unit of MPa;

DOL_0 $\geq$ 0.15t, where DOL_0 is a depth of the compressive stress layer, and t is a thickness of the reinforced microcrystalline glass; and

surface $K_2O$ concentration of the reinforced microcrystalline glass $\geq$ 7.50 wt%.

The above technical solution of the present invention also provides a reinforced microcrystalline glass with a specific surface CS, a specific ratio of surface CS to |CT_AV|, a DOL_0 within the abovespecified range, and an appropriate surface $K_2O$ concentration. This enables the reinforced microcrystalline glass to have a unique stress structure and composition, and to allow it to resist surface erosion from components in water and air under high temperature and humidity. The applicants believe this is likely due to a lower reactivity of $K^+$ compared to $Na^+$, making it less prone to reacting with air and water. Additionally, the larger radius of $K^+$ relative to $Na^+$ can obstruct other components within the glass from undergoing chemical interactions with water and air, thus ensuring that the reinforced microcrystalline glass meets the requirements for contact surface cracking resistance and simultaneously possesses good non-contact surface cracking resistance and good weather resistance.

In any of the reinforced microcrystalline glasses above of the present invention, the comprehensive performance of the reinforced microcrystalline glass is enhanced through the following features, as specified below.

To further improve the weather resistance of the reinforced microcrystalline glass, in optional cases, a surface

$K_2O$ concentration of the reinforced microcrystalline glass is 7.00-15.00 wt%. Optionally, a surface $K_2O$ concentration of the reinforced microcrystalline glass is 7.50-15.00 wt%. For example, the surface $K_2O$ concentration of the reinforced microcrystalline glass can be any one of the following values: 7.00 wt%, 7.50 wt%, 8.00 wt%, 8.50 wt%, 9.00 wt%, 9.50 wt%, 10.00 wt%, 10.50 wt%, 11.00 wt%, 11.50 wt%, 12.00 wt%, 13.00 wt%, 14.00 wt%, or 15.00 wt%, and any value between adjacent values.

Optionally, the total weight percentage of the petalite crystalline phase and lithium disilicate crystalline phase in the reinforced microcrystalline glass can be, for example, 71.00-90.00 wt%, 75.00-85.00 wt%, or 78.00-82.00 wt%.

In some embodiments, the surface CS of the reinforced microcrystalline glass is $\geq 500$ MPa, for example, it can range from 500-1200 MPa, including any value such as 500 MPa, 550 MPa, 600 MPa, 650 MPa, 700 MPa, 750 MPa, 800 MPa, 850 MPa, 900 MPa, 950 MPa, 1000 MPa, or 1200 MPa, and any value between adjacent values. The surface CS of the reinforced microcrystalline glass within the above range enhances the non-contact surface cracking resistance of the reinforced microcrystalline glass. Optionally, the surface CS is 550-1000 MPa. Optionally, the surface CS is 810-900 MPa. In the optional solution of the present invention, when the blunt object contacts the microcrystalline glass, its impact force preferentially offsets the surface CS; however, the back surface (i.e., the non-contact surface) undergoes smaller deformation due to the high surface CS, which further improves the non-contact surface cracking resistance of the reinforced microcrystalline glass.

In some embodiments, the reinforced microcrystalline glass has a $|CT\_AV| \geq 30$ MPa, ranging, for example, from 30-80 MPa, including values such as 30 MPa, 35 MPa, 40 MPa, 45 MPa, 50 MPa, 55 MPa, 60 MPa, 65 MPa, 70 MPa, 75 MPa, or 80 MPa, and any value between adjacent values. $|CT\_AV|$ of the reinforced microcrystalline glass within the above range enhances the contact surface cracking resistance of the reinforced microcrystalline glass. Optionally, $|CT\_AV|$ is 35-60 MPa. In optional solutions of the present invention, the higher $|CT\_AV|$ prevents further piercing of sharp objects and lateral propagation of cracks, thereby further improving the contact surface cracking resistance of the reinforced microcrystalline glass.

In some embodiments, in the reinforced microcrystalline glass, $50.00 \geq$ surface $CS/|CT\_AV| \geq 17.00$ includes values such as 17, 18, 19, 20, 21, 22, 23, 24, 25, 30, 35, 40, 45, or 50, and any value between adjacent values. When the surface $CS/|CT\_AV|$ falls within the above range, the reinforced microcrystalline glass has a higher non-contact surface cracking resistance. Optionally, the surface $CS/|CT\_AV|$ is 18-23. In the optional solution of the surface $CS/|CT\_AV|$, the stress structure of the reinforced microcrystalline glass is more suitable for optimizing the non-contact surface cracking resistance to a more favorable level.

Optionally, $0.25t \geq DOL\_0 \geq 0.15t$, for example, it can be 0.15t-0.25t, any value of 0.15t, 0.16t, 0.17t, 0.20t, 0.22t, 0.23t, 0.25t, and any value between adjacent values. In the optional solution, the appropriate DOL_0 is adapted to thickness t, which can prevent sudden cracks from directly penetrating the compressive stress region to reach the tensile stress region, resulting in fragmentation when pierced by sharp objects. Therefore, the stress layer of the reinforced microcrystalline glass is better in contact surface cracking resistance.

In some embodiments of the present invention, the reinforced microcrystalline glass further satisfies a condition: $|CT\_CV| \geq 50$ MPa, where $|CT\_CV|$ is an absolute value of a maximum tensile stress in the tensile stress layer. In the optional solution, the reinforced microcrystalline glass has a more optimized tensile stress layer distribution structure, which is more conducive to achieving a higher level of contact surface cracking resistance.

Optionally, $|CT\_CV|$ is 55-80 MPa.

In some embodiments, a ratio of the petalite crystalline phase to the lithium disilicate crystalline phase in the reinforced microcrystalline glass is (0.9-1.1): 1. In the solution of the present invention, the ratio of petalite crystalline phase to lithium disilicate crystal phase within the above range enables a reasonable distribution of the main crystalline phase, thereby better facilitating the reinforced microcrystalline glass in enhancing non-contact surface cracking resistance. Optionally, a ratio of the petalite crystalline phase to the lithium disilicate crystalline phase is 0.90-0.99 :1. Optionally, an average grain size in the reinforced microcrystalline glass is $\leq 100$ nm. Optionally, the average grain size is 10-50 nm. Optionally, the average grain size is 15-25 nm. The present invention has crystal grains of suitable size, thus enabling higher transparency of the glass while ensuring strength.

In some optional embodiments of the present invention, in mass percent, a composition of the tensile stress layer in the reinforced microcrystalline glass includes: $SiO_2$ of 58.00-76.00%; $Al_2O_3$ of 6.00-8.00%; $P_2O_5$ of 2.00-3.00%; $ZrO_2$ of 4.00-6.00%; $Na_2O$ of 3.00-10.00%; $Li_2O$ of 9.00-12.00%; and $B_2O_3$ of 0-3.00%. In the optional solution, the composition of the reinforced microcrystalline glass is more conducive to forming the aforementioned specific stress distribution and high transparency and intrinsic strength.

In the composition of the present invention, the roles of each element are as follows.

$SiO_2$, as the network-forming oxide of glass, is an indispensable component in constructing the glass network structure. However, excessive $SiO_2$ will increase the viscosity of the glass, causing issues in glass melting. During the crystallization process, $SiO_2$ is an essential part of petalite and lithium disilicate. The applicants found that, when the content of $SiO_2$ is controlled within the above range, the glass forming and crystallization effects are better. The content of $SiO_2$ can be, for example, 60.00-75.00 wt%, 62.00-72.00 wt%, or 65.00-70.00 wt%, any value such as 58.00 wt%, 60.00 wt%, 63.00 wt%, 65.00 wt%, 68.00 wt%, 70.00 wt%, 72.00 wt%, 75.00 wt%, 76.00 wt%, and any value between adjacent values.

$Al_2O_3$ is an important component of petalite and also a main ingredient controlling crystal phase ratio and crystal grain size. Furthermore, $Al_2O_3$ facilitates the ion exchange during the reinforcement process. However, excessive $Al_2O_3$ also tends to increase the viscosity of the glass. The applicants found that when the content of $Al_2O_3$ is controlled within the above range, the performance of the product is optimal in all aspects. The content of $Al_2O_3$ can be, for example, 6.50-7.50 wt%, 6.80-7.20 wt%, or 6.90-7.10 wt%, any value such as 6.00 wt%, 6.50 wt%, 7.00 wt%, 7.50 wt%, 8.00 wt%, and any value between adjacent values.

In the present invention, $P_2O_5$ is an auxiliary nucleating agent and is an essential part. When its content is too low or too high, it will lead to a poor crystallization effect, and the resulting microcrystalline glass will not be sufficiently transparent. Therefore, $P_2O_5$ is controlled within the above range. The content of $P_2O_5$ can be, for example, 2.10-2.90 wt%, 2.30-2.70 wt%, or 2.40-2.60 wt%, any value such as 2.00 wt%, 2.20 wt%, 2.50 wt%, 2.70 wt%, 2.90 wt%, 3.00 wt%, and any value between adjacent values.

In the present invention, $ZrO_2$ is the main nucleating agent, serving to reduce crystal grain size. However, when its content is too high, it will increase the difficulty of glass melting and result in a large amount of white precipitates. Therefore, $ZrO_2$ is controlled within the above range. The content of $ZrO_2$ can be, for example, 4.40-5.60 wt%, 4.80-5.30 wt%, or 4.90-5.10 wt%, any value such as 4.00 wt%, 4.20 wt%, 4.50 wt%, 5.00 wt%, 5.50 wt%, 6.00 wt%, and any value between adjacent values.

$Li_2O$ and $Na_2O$, as network-modifying oxides for glass formation, can provide free oxygen, which disrupts the glass network structure, optimizes the viscosity of glass, promotes the melting and clarification of the glass melt, and allows ion exchange with molten salt baths. The content of both is an important factor affecting glass stress, where $Na_2O$ has a significant effect on increasing the CS of the glass surface. Additionally, $Li_2O$ is also a necessary chemical component for forming crystal phases such as lithium metasilicate ($Li_2SiO_3$) and petalite ($LiAlSi_4O_{10}$). However, the excessive addition of $Li_2O$ and $Na_2O$ can lead to poor stability of the glass crystallization process, a sharp decrease in crystallinity/crystal content, and even precipitation of other crystal phases. Through numerous experiments, the applicants found that, when the contents of $Li_2O$ and $Na_2O$ are controlled within the above range, the performance of the resulting product meets requirements. The content of $Na_2O$ can be, for example, 4.00-9.00 wt%, 5.00-8.00 wt%, 6.00-7.00 wt%, or 3.00-4.00 wt%, any value such as 3.00 wt%, 3.50 wt%, 4.00 wt%, 4.50 wt%, 5.00 wt%, 5.50 wt%, 6.00 wt%, 6.50 wt%, 7.00 wt%, 7.50 wt%, 8.00 wt%, 9.00 wt%, 10.00 wt%, and any value between adjacent values. The content of $Li_2O$ can be, for example, 9.40-11.60 wt%, 9.80-11.20 wt%, or 10.50-11.00 wt%, any value such as 9.00 wt%, 9.50 wt%, 10.00 wt%, 10.50 wt%, 11.00 wt%, 11.50 wt%, 12.00 wt%, and any value between adjacent values.

In the present invention, $B_2O_3$ acts as a flux agent, which can reduce the high-temperature viscosity of the glass and alleviate the melting difficulties caused by $ZrO_2$. However, excessive $B_2O_3$ will reduce the phase separation of the glass, thereby decreasing glass transparency. Therefore, the content of $B_2O_3$ is generally controlled within the above range. The content of $B_2O_3$ can be, for example, 0.40-2.80 wt%, 0.80-2.50 wt%, or 1.20-2.00 wt%, any value such as 0, 0.10 wt%, 0.50 wt%, 1.00 wt%, 1.50 wt%, 2.00 wt%, 2.50 wt%, 3.00 wt%, and any value between adjacent values.

According to the present invention, the non-contact surface cracking resistance performance is characterized by the average single-rod static pressure strength. Optionally, at a thickness of 0.7 mm, the average single-rod static pressure strength of the reinforced microcrystalline glass is ≥400 N. Optionally, the average single-rod static pressure strength is 401-500 N, which can be, for example, any value such as 401 N, 410 N, 420 N, 430 N, 440 N, 450 N, 460 N, 470 N, 480 N, 490 N, 500 N, and any value between adjacent values.

According to the present invention, the weather resistance is characterized by the high-temperature and high-humidity failure time. Optionally, under conditions of 85°C and 85% relative humidity, a high-temperature and high-humidity failure test is performed on the reinforced microcrystalline glass, where a high-temperature and high-humidity failure time is ≥ 204 h, optionally above 240 h. The high-temperature and high-humidity failure time is a time at which the reinforced microcrystalline glass develops non-removable spots or fogging points under corresponding high-temperature and high-humidity conditions. The high-temperature and high-humidity failure time of the reinforced microcrystalline glass in the present invention is long, with good weather resistance.

According to the present invention, the contact surface cracking resistance performance is characterized by the average anti-sandpaper drop height. Optionally, at a thickness of 0.7 mm, an anti-sandpaper drop test is conducted on the reinforced microcrystalline glass using 120-mesh sandpaper, where the average anti-sandpaper drop height is 1.10-1.50 m, which can be any value such as 1.1 m, 1.12 m, 1.15 m, 1.18 m, 1.2 m, 1.23 m, 1.25 m, 1.28 m, 1.29 m, 1.3 m, 1.32 m, 1.35 m, 1.38 m, 1.4 m, 1.45 m, 1.5 m, and any value between adjacent values.

Optionally, at a thickness of 0.7 mm, for light with a wavelength of 550 nm, a transmittance of the reinforced microcrystalline glass is not less than 89.00%. The light transmittance of the reinforced microcrystalline glass in the present invention is high, which can meet market demand.

The present invention also provides a glass device, wherein the glass device is made from any of the aforementioned reinforced microcrystalline glasses.

The glass device of the present invention can be regular or irregular and can be manufactured as needed.

The present invention further provides an electronic apparatus, which includes a cover, wherein the cover includes any of the aforementioned reinforced microcrystalline glasses.

The electronic apparatus of the present invention includes but is not limited to at least one of mobile phones, displays (such as in-vehicle displays, avionics displays, etc.), tablet computers, electronic watches, smart wearables (such as smart bracelets, smart watches, smart glasses), and televisions.

In the electronic apparatus of the present invention, a layer can or cannot be provided on the surface of the cover.

In the present invention, no limitation is made regarding the thickness of the reinforced microcrystalline glass; the thickness of the reinforced microcrystalline glass can be selected based on needs. Exemplarily, the thickness of the reinforced microcrystalline glass can be 0.2-5 mm.

The present invention provides a wide range of options for the preparation method of any of the aforementioned reinforced microcrystalline glasses. As long as the required conditions such as the above-mentioned stress structure characteristics can be satisfied, it ensures that the reinforced microcrystalline glass possesses good contact surface cracking resistance, good non-contact surface cracking resistance, and good weather resistance.

Optionally, the present invention further provides a preparation method for the reinforced microcrystalline glass, which includes: substrate glass preparation, nucleation treatment, crystallization treatment, and chemical reinforcement treatment.

In some optional embodiments, the process of preparing the substrate glass includes: mixing raw materials, optionally adding a clarifying agent, then melting, followed by shaping and cooling, then annealing and cooling. Optionally, after annealing and cooling to room temperature, the substrate glass can be obtained.

A person skilled in the art can select the conditions of the raw material mixing according to needs. Optionally, the mixing time of the raw materials is at least 30 min.

In the present invention, a person skilled in the art can select the type (such as NaCl) and amount of the clarifying agent according to needs, without needing to make inventive efforts.

Optionally, the melting conditions include: a temperature of 1550-1650°C and a time of at least 5 h.

Optionally, the final cooling temperature for the process of shaping and cooling is 700-900°C.

Optionally, the annealing conditions include: a temperature of 400-500°C and a time of 12-240 h.

In some optional embodiments, the nucleation treatment conditions include: a nucleation temperature of 500-700°C and a nucleation treatment time of 10-1440 min. Optionally, the nucleation treatment time is 50-350 min. The nucleation treatment time refers to a temperature-holding time after heating to the set nucleation temperature at a heating rate.

Optionally, the nucleation treatment conditions also include: a heating rate of 1-50°C/min, optionally 5-30°C/min, to reach the nucleation temperature.

In some optional embodiments, the crystallization treatment conditions include: a crystallization temperature of 600-750°C and a crystallization treatment time of 5-1440 min. Optionally, the crystallization treatment time is 50-350 min. The crystallization treatment time refers to a temperature-holding time after heating to the set crystallization temperature at a heating rate.

Optionally, the crystallization treatment conditions also include: a heating rate of 1-50°C/min. Optionally, a heating rate of 5-30°C/min to reach the crystallization temperature.

In the present invention, after the crystallization treatment, the process further includes steps such as shaping and polishing, followed by the chemical reinforcement treatment. Exemplarily, the steps of shaping and polishing include: obtaining samples with fixed dimensions by shaping, cutting, and polishing microcrystalline glass sample bricks (wherein the microcrystalline glass sample bricks are obtained after nucleation treatment and crystallization treatment). The samples used in the following embodiments of the present invention include polished sheets with a length, width, and thickness of 50 mm × 50 mm × 0.7 mm and 158.8 mm × 72.8 mm × 0.7 mm.

In some optional embodiments, the process of chemical reinforcement treatment includes: a first reinforcement in sodium-potassium molten salt, followed by a second reinforcement in potassium molten salt.

Optionally, the conditions for the first reinforcement include: a first reinforcement temperature of 380-550°C and a first reinforcement time of 1-24 h.

Optionally, the conditions for the second reinforcement include: a second reinforcement temperature of 400-500°C and a second reinforcement time of 5-1440 min.

Optionally, in the sodium-potassium molten salt, the sodium salt content is 5-50 wt%, and the potassium salt content is 50-95 wt%.

Optionally, in the potassium molten salt, the potassium salt content is 100 wt%.

Optionally, the sodium salt is selected from at least one of sodium nitrate, sodium sulfate, and sodium carbonate. Optionally, the sodium salt is sodium nitrate; and the potassium salt is selected from at least one of potassium nitrate, potassium sulfate, and potassium carbonate. Optionally, the potassium salt is potassium nitrate.

In the present invention, the reinforced microcrystalline glass with the aforementioned stress structure characteristics can be prepared through the above reinforcement process.

The applicants of the present invention have found that the stress structure of microcrystalline glass in the prior art is typically characterized by surface CS and CT, but microcrystalline glass that meets conventional ranges of surface CS and CT often has low non-contact surface cracking resistance and cannot meet the requirements. Moreover, the correlation between surface CS, CT, etc., and the non-contact surface cracking resistance is unclear in the prior art. It has further been discovered that by ensuring the microcrystalline glass with petalite and lithium disilicate as the main crystal phases meet specific stress characteristics, particularly a level of surface CS/|CT_AV|, it is possible to improve the non-contact surface cracking resistance of the microcrystalline glass while ensuring it meets the requirements for contact surface cracking resistance. At the same time, by controlling the surface $K_2O$ concentration of the microcrystalline glass, the issue of inadequate weather resistance in the microcrystalline glass products after reinforcement can be addressed.

Utilizing the above research findings, the present invention provides a reinforced microcrystalline glass with specific surface CS, a specific ratio of surface CS to |CT_AV|, and a DOL_0 within the above specific range. Therefore, the reinforced microcrystalline glass has a specific stress structure, which significantly improves the non-contact surface cracking resistance of the reinforced microcrystalline glass and also possesses good contact surface cracking resistance. Furthermore, providing a reinforced microcrystalline glass that meets a specific stress structure and has a surface $K_2O$ concentration within a specific range also allows for good weather resistance.

Example

The present invention will be further elaborated with specific embodiments below.

Example 1

A reinforced microcrystalline glass is manufactured by the following method.

1. Preparation of sample bricks:

1000g of raw material was prepared according to the raw material ratio of substrate glass (numbered C) shown in Table 1. The raw material was then mixed for 30 min using a V-type mixer, and after mixing, 5g of clarifying agent (NaCl) was added. The raw material was then transferred to a platinum crucible and melted in a 1650°C furnace for 5 hours. Afterward, the material was poured into a molding mold to cool and form. The material was cooled to 900°C, then placed in a 500°C annealing furnace for 24 hours, and finally cooled to room temperature with the furnace. Thus, the substrate glass was obtained.

2. Crystallization of sample bricks:

The substrate glass was sequentially processed by nucleation treatment and crystallization treatment to prepare transparent microcrystalline glass.

Specifically, the temperature was raised at a heating rate of 10°C/min to the nucleation temperature for nucleation treatment, then further raised at a heating rate of 10°C/min to the crystallization temperature for crystallization treatment. The nucleation temperature, nucleation treatment time, crystallization temperature, and crystallization treatment time are shown in Table 1.

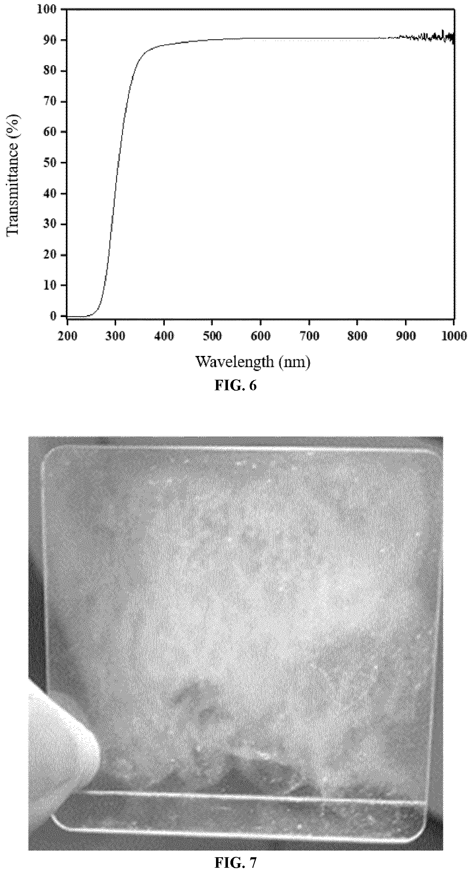

The crystallization content and light transmittance of the obtained transparent microcrystalline glass were tested. The resultant data are shown in Table 1, and the light transmittance curve is shown in FIG. 6.

3. Sample processing:

The microcrystalline glass sample brick was shaped, cut, and polished to obtain samples of the desired dimensions, such as polished microcrystalline glass sheets with a length, width, and thickness of 50mm × 50mm × 0.7mm, 158.8mm × 72.8mm × 0.7mm, etc. In this case, the thickness t = 0.7mm. The difference between the thickness of the microcrystalline glass sheet and the thickness of the reinforced microcrystalline glass sheet obtained after chemical reinforcement is very small and can be ignored.

4. Chemical reinforcement:

The obtained microcrystalline glass polished sheet was subjected to the first reinforcement in a sodium-potassium mixed salt bath. The sodium ions in the salt bath were provided by sodium nitrate, and the potassium ions were provided by potassium nitrate. The microcrystalline glass, after the first reinforcement, was subjected to the second reinforcement in a pure potassium salt bath, and the potassium salt was provided by potassium nitrate. Therefore, the reinforced microcrystalline glass was obtained.

The conditions for the first reinforcement (including salt bath composition, salt bath temperature, and time of the first reinforcement), and the conditions for the second reinforcement (including salt bath composition, salt bath temperature, and time of the second reinforcement) are shown in Table 2.

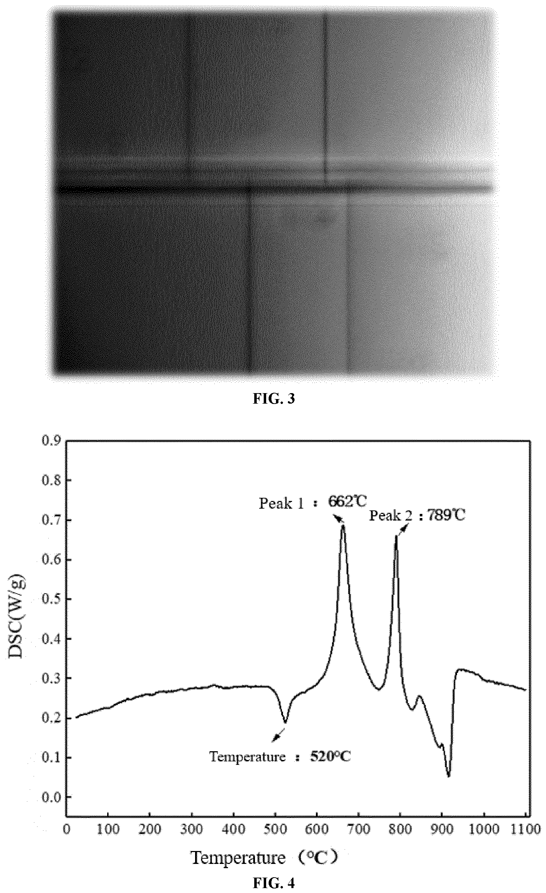

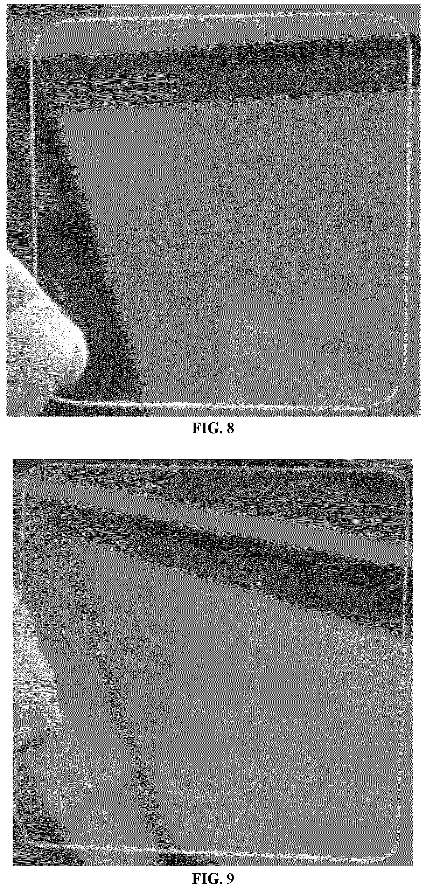

The surface $K_2O$ concentration, surface CS, |CT_AV|, |CT_CV|, DOL_0, average anti-sandpaper drop height, average single-rod static pressure strength, and high-temperature and high-humidity failure time of the obtained reinforced microcrystalline glass were tested. The results are shown in Table 2. The glass test image of surface CS is shown in FIG. 3. In the high-temperature and high-humidity failure time test, the sample image after 240 h in a high-temperature and high-humidity environment is shown in FIG. 8.

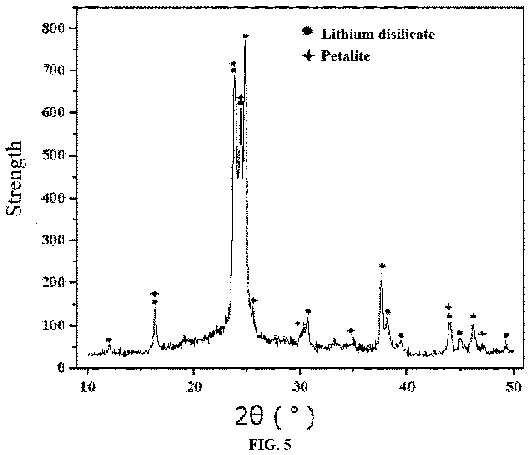

In this example, the DSC test curve of the substrate glass and the XRD diffraction test curve of the microcrystalline glass are shown in FIG. 4 and FIG. 5, respectively. From FIG. 4, it can be seen that the substrate glass in the example has clear nucleation and crystallization temperature points, and no other impurity phase peaks are present in the nucleation and crystallization temperature range. From FIG. 5, it can be seen that the microcrystalline glass prepared in the example has good crystallinity, with small grain sizes for both phases. This further indicates its high intrinsic strength and good transparency.

Example 2 to Example 5

The examples were carried out according to the method of Example 1, with the difference that they were carried out according to the formulations and process conditions shown in Tables 1 and 3. The substrate glass numbers for Examples 2-5 are D, E, F, and G in sequence.

The corresponding crystalline phases, surface $K_2O$ concentration tests, and performance tests are shown in Tables 1 and 3, respectively.

Example 6

The example was carried out according to the method of Example 5, with the difference that it was carried out according to the process conditions in Table 3 and the substrate glass formulation was identical to that of Example 5.

The corresponding performance tests are shown in Table 3.

Comparative Example 1 to Comparative Example 2

The examples were carried out according to the method of Example 1, with the difference that they were carried out according to the substrate glass formulations and process conditions shown in Tables 1 and 2 (where the substrate glass numbers for Comparative Examples 1-2 are A and B).

The corresponding crystalline phase tests and performance test results are shown in Tables 1 and 2, respectively.

Comparative Example 3 to Comparative Example 5

The examples were carried out according to the method of Example 1, with the difference that they were carried out according to the process conditions shown in Table 2, where the substrate glass formulations (substrate glass number is C) and other conditions were identical to those in Example 1.

The corresponding performance test results are shown in Table 2. In the high-temperature and high-humidity failure time test, FIG. 7 shows an image of the reinforced microcrystalline glass of Comparative Example 4 after 24 h in a high temperature and high humidity environment, and FIG. 9 shows an image of the reinforced microcrystalline glass of Comparative Example 3 after 240 h in a high temperature and high humidity environment.

Table 1

| Substrate glass number | | A | B | C | D | E | F | G |
|---|---|---|---|---|---|---|---|---|
| Substrate glass composition (wt%) | $SiO_2$ | 70.02% | 69.70% | 70.58% | 69.28% | 68.21% | 65.70% | 65.51% |
| | $Al_2O_3$ | 7.52% | 7.48% | 7.09% | 6.96% | 6.85% | 6.60% | 6.78% |
| | $P_2O_5$ | 2.40% | 2.26% | 2.46% | 2.42% | 2.38% | 2.29% | 2.25% |
| | $ZrO_2$ | 5.48% | 5.49% | 5.39% | 5.29% | 5.20% | 5.01% | 4.34% |
| | $Na_2O$ | 1.80% | 2.57% | 3.36% | 4.28% | 5.20% | 7.89% | 9.49% |
| | $Li_2O$ | 11.20% | 10.97% | 10.77% | 11.42% | 10.41% | 10.82% | 9.96% |
| | $B_2O_3$ | 1.58% | 1.53% | 0.35% | 0.35% | 1.75% | 1.69% | 1.67% |
| Nucleation and crystallization conditions | Nucleation temperature (°C)/ Time (min) | 550/240 | 550/240 | 545/240 | 550/240 | 550/240 | 550/240 | 550/240 |
| | Crystallization temperature (°C)/ Time (min) | 660/240 | 660/240 | 670/90 | 680/240 | 670/240 | 650/240 | 670/90 |
| Product testing | Petalite crystalline phase content | 42.51% | 42.34% | 42.18% | 40.51% | 39.64% | 37.25% | 36.97% |
| | Lithium disilicate crystalline phase content | 43.33% | 43.17% | 43.12% | 42.37% | 41.78% | 39.18% | 37.75% |
| | Average grain size/nm | 18.6 | 20.3 | 19.7 | 19.4 | 19.8 | 20.4 | 21.4 |
| | 550nm-light transmittance (%) | 91.19 | 91.32 | 91.26 | 91.25 | 91.03 | 91.21 | 91.08 |

From Table 1, it can be seen that the substrate glass formulations, numbered A, B, and C through G, can all achieve high crystallinity and good transmittance in microcrystalline glass through nucleation and crystallization treatments. As shown in Table 1, when the $Na_2O$ content is less than 3 wt%, the corresponding product in Table 2 has lower surface CS, surface $K_2O$ concentration, and average single-rod static pressure strength. When the $Na_2O$ content is greater than 4 wt%, an increase in $Na_2O$ content leads to a partial reduction in crystallinity. In Table 3, the surface CS of the corresponding product fluctuates between 800-900 MPa, and the average single-rod static pressure strength fluctuates between 400-500 N. Therefore, using the $Na_2O$ content solution of the present invention can ensure that the obtained microcrystalline glass has higher crystallinity, which is more conducive to the intrinsic strength of the product.

Table 2

| Example number | Comparative Example 1 | Comparative Example 2 | Comparative Example 3 | Comparative Example 4 | Comparative Example 5 | Example 1 |
|---|---|---|---|---|---|---|
| Substrate glass | A | B | C | C | C | C |
| Salt bath composition of first reinforcement (wt%) | 50% $NaNO_3$+ 50%$KNO_3$ | 50% $NaNO_3$+ 50%$KNO_3$ | 95% $NaNO_3$+ 5%$KNO_3$ | 100% $NaNO_3$ | / | 50% $NaNO_3$+ 50%$KNO_3$ |
| Salt bath temperature of first reinforcement /°C | 450 | 450 | 450 | 450 | / | 450 |

(continued)

| Example number | Comparative Example 1 | Comparative Example 2 | Comparative Example 3 | Comparative Example 4 | Comparative Example 5 | Example 1 |
|---|---|---|---|---|---|---|
| Salt bath time of first reinforcement/h | 6 | 4 | 6 | 6 | / | 2 |
| Salt bath composition of second reinforcement (wt%) | 100% $KNO_3$ | 100% $KNO_3$ | 100% $KNO_3$ | / | 100% $KNO_3$ | 100% $KNO_3$ |
| Salt bath temperature of second reinforcement /°C | 450 | 450 | 450 | / | 450 | 450 |
| Salt bath time of second reinforcement/min | 30 | 30 | 120 | / | 30 | 30 |
| Surface $K_2O$ concentration of products/wt% | 2.05% | 2.79% | 9.63% | 0% | 8.69% | 8.76% |
| Surface CS/MPa | 351 | 393 | 413 | 269 | 823 | 817 |
| \|CT_AV\|/MPa | 52.6 | 50.5 | 42.4 | 49.8 | 8.7 | 43.6 |
| \|CT_CV\|/MPa | 74.3 | 70.7 | 61.1 | 70.3 | 10.4 | 63.7 |
| DOL_0 ($\mu$m) | 129.2 | 132.3 | 130.7 | 128.6 | 8.5 | 138.5 |
| Thickness t of reinforced microcrystalline glass (mm) | 0.7 | 0.7 | 0.7 | 0.7 | 0.7 | 0.7 |
| DOL_0/t | 0.18 | 0.19 | 0.19 | 0.18 | 0.01 | 0.20 |
| Surface CS/\|CT_AV\| | 6.67 | 7.78 | 9.74 | 5.40 | 94.60 | 18.74 |
| Average anti-sandpaper drop height (m) | 1.42 | 1.37 | 1.22 | 1.32 | 0.56 | 1.4 |
| Average single-rod static pressure strength (N) | 308 | 312 | 342 | 306 | 421 | 468 |
| High-temperature and high-humidity failure time/h | 168 | 192 | 360 | 24 | 240 | 312 |

From the comparative examples and Example 1 in Table 2, it can be seen that in Example 1 of the present invention, which simultaneously satisfies the conditions of surface CS $\geq$ 400 MPa, surface CS/ICT_AV| $\geq$ 17, and DOL_0/t $\geq$ 0.15, the average anti-sandpaper drop height and average single-rod static pressure strength are at a higher, optimal level. This indicates that superior contact surface cracking resistance and non-contact surface cracking resistance can be obtained. However, comparative examples that meet only one of the above three conditions cannot have non-contact surface cracking resistance and contact surface cracking resistance at the same time. Furthermore, in Example 1 of the present invention, which also satisfies a condition of sample surface $K_2O$ concentration greater than 7 wt%, the high-temperature and high-humidity failure time is longer, indicating that while possessing good non-contact surface cracking resistance and contact surface cracking resistance, it also has superior weather resistance.

From Comparative Example 1, Comparative Example 2, and Example 1 in Table 2, it can be seen that the samples obtained in Comparative Example 1 and Comparative Example 2 have surface $K_2O$ concentration $\leq$ 7 wt%, surface CS < 400 MPa, surface CS/|CT_AV| < 17, and DOL_0/t $\geq$ 0.15. Comparative Example 1 and Comparative Example 2, while having good average anti-sandpaper drop height, have average single-rod static pressure strength noticeably lower than that of Example 1. That is to say, the contact surface cracking resistance of Comparative Example 1 and Comparative Example 2 is comparable to that of Example 1, but their non-contact surface cracking resistance is clearly inferior to Example 1 of the present invention, which simultaneously satisfies conditions of sample surface $K_2O$ concentration greater than 7 wt%, surface CS $\geq$ 400 MPa, surface CS/|CT_AV| $\geq$ 17, and DOL_0/t $\geq$ 0.15.

From Comparative Example 3 and Example 1 in Table 2, it can be seen that although Comparative Example 3 meets the conditions of sample surface $K_2O$ concentration $\geq$ 7 wt%, surface CS $\geq$ 400 MPa, and DOL_0/t $\geq$ 0.15, the surface CS decreased to 413 MPa due to excessive reinforcement time, resulting in surface CS/|CT_AV| < 17 and thus a reduction in average single-rod static pressure strength. This means that the non-contact surface cracking resistance is decreased.

From Comparative Example 4 and Example 1 in Table 2, it can be seen that the substrate glass sample for reinforcement in Comparative Example 4 is the same as that in Example 1 but a second reinforcement is not performed in Comparative Example 4, where the reinforcement time is insufficient. Therefore, although it has a high average anti-sandpaper drop height, it does not satisfy the condition of surface CS/ICT_AV| $\geq$ 17, which leads to a lower average single-rod static pressure strength, i.e., lower non-contact surface cracking resistance.

From Comparative Example 5 and Example 1 in Table 2, it can be seen that the substrate glass sample for reinforcement in Comparative Example 5 is the same as that in Example 1 but a first reinforcement is not performed in Comparative Example 5. Therefore, although it has a high average single-rod static pressure strength, it does not satisfy the condition of surface DOL_0/t$\geq$0.15, which leads to a lower average anti-sandpaper drop height, i.e., lower contact surface cracking resistance.

Table 3

| Example number | Example 2 | Example 3 | Example 4 | Example 5 | Example 6 |
|---|---|---|---|---|---|
| Substrate glass | D | E | F | G | G |
| Salt bath composition of first reinforcement (wt%) | 5% $NaNO_3$+ 95% $KNO_3$ | 20% $NaNO_3$+ 80%$KNO_3$ | 30% $NaNO_3$+ 70%$KNO_3$ | 40% $NaNO_3$+ 60%$KNO_3$ | 50% $NaNO_3$+ 50%$KNO_3$ |
| Salt bath temperature of first reinforcement /°C | 450 | 450 | 450 | 450 | 450 |
| Salt bath time of first reinforcement/h | 1.5 | 6 | 2 | 3 | 3 |
| Salt bath composition of second reinforcement (wt%) | 100% $KNO_3$ | 100% $KNO_3$ | 100% $KNO_3$ | 100% $KNO_3$ | 100% $KNO_3$ |
| Salt bath temperature of second reinforcement /°C | 450 | 450 | 450 | 450 | 450 |
| Salt bath time of second reinforcement/min | 30 | 40 | 30 | 40 | 50 |
| Surface $K_2O$ concentration of products/wt% | 8.97% | 8.86% | 9.54% | 8.79% | 10.69% |
| Surface CS/MPa | 826 | 819 | 826 | 854 | 867 |
| |CT_AV|/MPa | 42.2 | 42.6 | 40.2 | 38.6 | 38.2 |
| |CT_CV| /MPa | 62.6 | 62.1 | 59.7 | 57.4 | 56.9 |
| DOL_0 ($\mu$m) | 120.6 | 125.9 | 135.4 | 141.3 | 140.6 |
| Thickness t of microcrystalline glass (mm) | 0.7 | 0.7 | 0.7 | 0.7 | 0.7 |
| DOL_0/t | 0.17 | 0.18 | 0.19 | 0.20 | 0.20 |
| Surface CS/|CT_AV| | 19.57 | 19.23 | 20.55 | 22.12 | 22.70 |

(continued)

| Example number | Example 2 | Example 3 | Example 4 | Example 5 | Example 6 |
|---|---|---|---|---|---|
| Average anti-sandpaper drop height (m) | 1.35 | 1.32 | 1.29 | 1.25 | 1.21 |
| Average single-rod static pressure strength (N) | 466 | 446 | 441 | 422 | 417 |
| High-temperature and high-humidity failure time/h | 360 | 336 | 360 | 360 | 432 |

From Examples 1, 2, 3, 4, 5, and 6 in Table 2 and Table 3, it can be seen that in the example solutions of the present invention, the average anti-sandpaper drop height is 1.10-1.50 m, the average single-rod static pressure strength is $\geq 400$ N, and the high-temperature and high-humidity failure time is greater than 240 h (more than 204 h). This indicates that all examples of the present invention have good contact surface cracking resistance, good non-contact surface cracking resistance, and good weather resistance. From the comparison of FIGS. 7 and 8, it can be seen that the weather resistance of the reinforced microcrystalline glass using the solutions of the present invention is significantly better. Although FIG. 9 shows that the weather resistance of Comparative Example 3 is similar to that of Example 1 in FIG. 8 of the present invention, its non-contact surface cracking resistance is significantly inferior to the present invention.

The above details describe optional embodiments of the present invention in detail, but the present invention is not limited to these. Within the scope of the technical concept of the present invention, various simple modifications can be made to the technical solutions of the present invention, including combining any technical features in any other suitable manner. These simple modifications and combinations should also be considered as part of the content disclosed in the present invention and fall within the scope of protection of the present invention.

## INDUSTRIAL PRACTICALITY

The present invention provides a reinforced microcrystalline glass with good monomer strength and good drop resistance, a glass device, and an electronic apparatus. The reinforced microcrystalline glass of the present invention has good non-contact surface cracking resistance, and also has good contact surface cracking resistance and weather resistance. Therefore, it has good practical characteristics.

## Claims

1. A reinforced microcrystalline glass, wherein the reinforced microcrystalline glass comprises a compressive stress layer and a tensile stress layer, **characterized in that** main crystalline phases of the reinforced microcrystalline glass comprise a petalite crystalline phase and a lithium disilicate crystalline phase, and the reinforced microcrystalline glass satisfies conditions:

$$\text{surface CS} \geq 400 \text{ MPa};$$

surface CS/|CT_AV| $\geq 17.00$, where |CT_AV| is an absolute value of an average tensile stress in the tensile stress layer, with a unit of MPa; and
DOL_0 $\geq 0.15t$, where DOL_0 is a depth of the compressive stress layer, and t is a thickness of the reinforced microcrystalline glass.

2. The reinforced microcrystalline glass according to claim 1, wherein the surface CS of the reinforced microcrystalline glass is $\geq 500$ MPa, optionally, the surface CS is 550-1000 MPa.

3. The reinforced microcrystalline glass according to claim 1 or 2, wherein |CT_AV| of the reinforced microcrystalline glass is $\geq 30$ MPa, optionally, |CT_AV| is 35-60 MPa.

4. The reinforced microcrystalline glass according to any one of claims 1 to 3, wherein in the reinforced microcrystalline glass, $50.00 \geq$ surface CS/|CT_AV| $\geq 17.00$.

5. The reinforced microcrystalline glass according to any one of claims 1 to 4, wherein $0.25t \geq DOL\_0 \geq 0.15t$.

6. The reinforced microcrystalline glass according to any one of claims 1 to 5, wherein the reinforced microcrystalline glass further satisfies a condition: $|CT\_CV| \geq 50$ MPa, where $|CT\_CV|$ is an absolute value of a maximum tensile stress in the tensile stress layer, optionally, $|CT\_CV|$ is 55-80 MPa.

7. The reinforced microcrystalline glass according to any one of claims 1 to 6, wherein surface $K_2O$ concentration of the reinforced microcrystalline glass is $\geq 7.00$ wt%.

8. The reinforced microcrystalline glass according to any one of claims 1 to 7, wherein surface $K_2O$ concentration of the reinforced microcrystalline glass is 7.00-15.00 wt%.

9. The reinforced microcrystalline glass according to any one of claims 1 to 8, wherein a total weight percentage of the petalite crystalline phase and the lithium disilicate crystalline phase in the reinforced microcrystalline glass is not less than 71.00 wt%.

10. The reinforced microcrystalline glass according to any one of claims 1 to 9, wherein a total weight percentage of the petalite crystalline phase and the lithium disilicate crystalline phase in the reinforced microcrystalline glass is 71.00-90.00 wt%.

11. The reinforced microcrystalline glass according to any one of claims 1 to 10, wherein a ratio of the petalite crystalline phase to the lithium disilicate crystalline phase in the reinforced microcrystalline glass is (0.9-1.1):1.

12. The reinforced microcrystalline glass according to any one of claims 1 to 11, wherein in the reinforced microcrystalline glass, an average grain size is $\leq 100$nm, optionally, 10-50nm, and more optionally, 15-25nm.

13. The reinforced microcrystalline glass according to any one of claims 1 to 12, wherein in mass percent, a composition of the tensile stress layer in the reinforced microcrystalline glass comprises: $SiO_2$ of 58.00-76.00%; $Al_2O_3$ of 6.00-8.00%; $P_2O_5$ of 2.00-3.00%; $ZrO_2$ of 4.00-6.00%; $Na_2O$ of 3.00-10.00%; $Li_2O$ of 9.00-12.00%; and $B_2O_3$ of 0-3.00%.

14. The reinforced microcrystalline glass according to any one of claims 1 to 13, wherein at a thickness of 0.7 mm, an average single-rod static pressure strength of the reinforced microcrystalline glass is $\geq 400$ N, and optionally, the average single-rod static pressure strength is 401-500N.

15. The reinforced microcrystalline glass according to claim 7, wherein under conditions of 85°C and 85% relative humidity, a high-temperature and high-humidity failure test is performed on the reinforced microcrystalline glass, where a high-temperature and high-humidity failure time is $\geq 204$ h, and the high-temperature and high-humidity failure time is a time at which the reinforced microcrystalline glass develops non-removable spots or fogging points under corresponding high-temperature and high-humidity conditions.

16. The reinforced microcrystalline glass according to any one of claims 1 to 13, wherein at a thickness of 0.7 mm, an anti-sandpaper drop test is performed on the reinforced microcrystalline glass using a 120-mesh sandpaper, where an average anti-sandpaper drop height is 1.10-1.50 m.

17. The reinforced microcrystalline glass according to any one of claims 1 to 13, wherein at a thickness of 0.7 mm, for light with a wavelength of 550 nm, a transmittance of the reinforced microcrystalline glass is not less than 89.00%.

18. A reinforced microcrystalline glass, wherein the reinforced microcrystalline glass comprises a compressive stress layer and a tensile stress layer, **characterized in that** the reinforced microcrystalline glass comprises a petalite crystalline phase and a lithium disilicate crystalline phase, with a total weight percentage not less than 71.00 wt%; and

the reinforced microcrystalline glass satisfies conditions:

$$\text{surface CS} \geq 400 \text{ MPa};$$

surface CS/$|CT\_AV| \geq 17.00$, where $|CT\_AV|$ is an absolute value of an average tensile stress in the tensile stress layer, with a unit of MPa;

DOL_0 ≥ 0.15t, where DOL_0 is a depth of the compressive stress layer, and t is a thickness of the reinforced microcrystalline glass; and

surface $K_2O$ concentration of the reinforced microcrystalline glass ≥ 7.50 wt%.

19. The reinforced microcrystalline glass according to claim 18, wherein the surface CS of the reinforced microcrystalline glass is ≥500 MPa, optionally, the surface CS is 550-1000 MPa.

20. The reinforced microcrystalline glass according to claim 18 or 19, wherein |CT_AV| of the reinforced microcrystalline glass is ≥30 MPa, optionally, |CT_AV| is 35-60 MPa.

21. The reinforced microcrystalline glass according to any one of claims 18 to 20, wherein in the reinforced microcrystalline glass, 50.00 ≥ surface CS/ICT_AV| ≥ 17.00.

22. The reinforced microcrystalline glass according to any one of claims 18 to 21, wherein in the reinforced microcrystalline glass, 0.25t ≥ DOL_0 ≥ 0.15t.

23. The reinforced microcrystalline glass according to any one of claims 18 to 22, wherein the reinforced microcrystalline glass further satisfies a condition: |CT_CV| ≥ 50 MPa, where |CT_CV| is an absolute value of a maximum tensile stress in the tensile stress layer, optionally, |CT_CV| is 55-80 MPa.

24. The reinforced microcrystalline glass according to any one of claims 18 to 23, wherein surface $K_2O$ concentration of the reinforced microcrystalline glass is 7.50-15.00 wt%.

25. The reinforced microcrystalline glass according to any one of claims 18 to 24, wherein a total weight percentage of the petalite crystalline phase and the lithium disilicate crystalline phase in the reinforced microcrystalline glass is 71.00-90.00 wt%.

26. The reinforced microcrystalline glass according to any one of claims 18 to 25, wherein a ratio of the petalite crystalline phase to the lithium disilicate crystalline phase in the reinforced microcrystalline glass is (0.9-1.1):1.

27. The reinforced microcrystalline glass according to any one of claims 18 to 26, wherein in the reinforced microcrystalline glass, an average grain size is ≤100nm, optionally, 10-50nm, and more optionally, 15-25nm.

28. The reinforced microcrystalline glass according to any one of claims 18 to 27, wherein in mass percent, a composition of the tensile stress layer in the reinforced microcrystalline glass comprises: $SiO_2$ of 58.00-76.00%; $Al_2O_3$ of 6.00-8.00%; $P_2O_5$ of 2.00-3.00%; $ZrO_2$ of 4.00-6.00%; $Na_2O$ of 3.00-10.00%; $Li_2O$ of 9.00-12.00%; and $B_2O_3$ of 0-3.00%.

29. The reinforced microcrystalline glass according to any one of claims 18 to 28, wherein at a thickness of 0.7 mm, an average single-rod static pressure strength of the reinforced microcrystalline glass is ≥ 400 N, and optionally, the average single-rod static pressure strength is 401-500N.

30. The reinforced microcrystalline glass according to any one of claims 18 to 28, wherein under conditions of 85°C and 85% relative humidity, a high-temperature and high-humidity failure test is performed on the reinforced microcrystalline glass, where a high-temperature and high-humidity failure time is ≥ 204 h, and the high-temperature and high-humidity failure time is a time at which the reinforced microcrystalline glass develops non-removable spots or fogging points under corresponding high-temperature and high-humidity conditions.

31. The reinforced microcrystalline glass according to any one of claims 18 to 28, wherein at a thickness of 0.7 mm, an anti-sandpaper drop test is performed on the reinforced microcrystalline glass using a 120-mesh sandpaper, where an average anti-sandpaper drop height is 1.10-1.50 m.

32. The reinforced microcrystalline glass according to any one of claims 18 to 28, wherein at a thickness of 0.7 mm, for light with a wavelength of 550 nm, a transmittance of the reinforced microcrystalline glass is not less than 89.00%.

33. A glass device, **characterized in that** the glass device is prepared from the reinforced microcrystalline glass according to any one of claims 1 to 17 or according to any one of claims 18 to 32.

34. An electronic apparatus, **characterized by** comprising a cover, wherein the cover comprises the reinforced microcrystalline glass according to any one of claims 1 to 17 or according to any one of claims 18 to 32.

35. The electronic apparatus according to claim 34, wherein the electronic apparatus comprises at least one a mobile phone, a display, a tablet, a smart wearable device, or a television.

FIG. 1

Cracks at the bottom first

FIG. 2

**FIG. 3**

**FIG. 4**

FIG. 5

**FIG. 6**

**FIG. 7**

FIG. 8

FIG. 9

## INTERNATIONAL SEARCH REPORT

| International application No. |
| --- |
| **PCT/CN2023/105260** |

| **A.** | **CLASSIFICATION OF SUBJECT MATTER** |
| --- | --- |

C03C10/12(2006.01)i; C03C21/00(2006.01)i; C03C10/04(2006.01)i

According to International Patent Classification (IPC) or to both national classification and IPC

| **B.** | **FIELDS SEARCHED** |
| --- | --- |

Minimum documentation searched (classification system followed by classification symbols)

IPC:C03C

Documentation searched other than minimum documentation to the extent that such documents are included in the fields searched

Electronic data base consulted during the international search (name of data base and, where practicable, search terms used)

VCN, DWPI, VEN, ENTXT, CJFD, CNKI, ISI, Elsevier Science: CS, 压应力, 压缩应力, 张应力, 拉应力, 拉伸应力, 内应力, 张力, ct, 平均, 透锂长石, 二硅酸锂, 焦硅酸锂, 微晶玻璃, 玻璃陶瓷, 鑫景, 华为, 黄昊, 周靖鹏, 田迁, 路广宇, 陈杰杰, 朱广祥, compressive stress, tension, tensile stress, ctav??, ct-av??, petalite?, berzeliite?, castor?, lithium disilicate?, average, microcrystalline glass??, glass ceramic?, +crystal+ glass??.

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| PX | CN 115073010 A (CHONGQING XINJING SPECIAL GLASS CO., LTD. et al.) 20 September 2022 (2022-09-20)<br>claims 1-35 | 1-35 |
| A | CN 114262156 A (SHENZHEN XUAN OPTICAL CO., LTD.) 01 April 2022 (2022-04-01)<br>entire document | 1-35 |
| A | WO 2021249032 A1 (KORNERSTONE MATERIALS TECHNOLOGY CO., LTD.) 16 December 2021 (2021-12-16)<br>entire document | 1-35 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 September 2023** | **24 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/105260**

| Patent document cited in search report | | | Publication date (day/month/year) | Patent family member(s) | | | Publication date (day/month/year) |
|---|---|---|---|---|---|---|---|
| CN | 115073010 | A | 20 September 2022 | CN | 115073010 | B | 15 September 2023 |
| CN | 114262156 | A | 01 April 2022 | WO | 2023082935 | A1 | 19 May 2023 |
| WO | 2021249032 | A1 | 16 December 2021 | CN | 111847885 | A | 30 October 2020 |
| | | | | CN | 111847885 | B | 07 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210869330
- CN 111867993 A